# EUROPEAN PATENT APPLICATION

(11) **EP 3 382 228 A1**
(43) Date of publication of application: **03.10.2018**
(21) Application number: 17163033.8
(22) Date of filing: 27.03.2017
(51) Int. Cl.: F16F 9/53

(54) **PRESSURE TUBE FOR USE IN AN ELECTROHEOLOGICAL FLUID DAMPER AND METHOD OF MANUFACTURING THEREOF**

(71) Applicant: Hitachi Automotive Systems, Ltd., Hitachinaka-shi Ibaraki 312-8503 (JP)
(72) Inventor: Bruns, Matthias Wilhelm, 65191 Wiesbaden (DE); Funke, Joachim, 64853 Otzberg (DE); Johnston, Lucien Sacheverell, 60389 Frankfurt (DE)
(74) Representative: Hoffmann Eitle

(57) **Abstract**

The present invention relates to a pressure tube for use in an electrorheological fluid damper, comprising a tube for use as an inner cylinder in an electrorheological fluid damper, a helix provided on an outer periphery of the tube, the helix comprising: an inner helical component and an outer helical component provided at least partially on the inner helical component, the outer helical component being provided so as to extend radially further outward relative to the tube than the inner helical component.

## Description

### TECHNICAL FIELD

The present invention relates to a pressure tube for use in an electrorheological fluid damper. It also relates to an electrorheological fluid damper comprising such a pressure tube. It also relates to methods of manufacturing a pressure tube and an electrorheological fluid damper.

### STATE OF THE ART

In motor vehicles, vibration dampers serve to ensure that the vibrations of the chassis quickly decay as sprung masses, in order to ensure the driving stability and to achieve a desired driving comfort. For this, usually, hydraulic vibration dampers are utilized, in which an axially slidable piston is guided in a cylinder filled with oil. On the piston there is arranged a piston rod that is led upwardly out of the cylinder in a sealed manner and secured on the vehicle chassis. On the other hand, the bottom end of the cylinder is preferably mounted on a wheel axle part. Thereby, the piston divides the cylinder into an upper extension chamber and a lower retraction chamber, which are connected with one another via at least one throttle valve.

In order to compensate for a retracting or submerging piston rod, the retraction chamber is additionally still connected with a gas pressure chamber, in which a pre-pressure of approximately 20 to 30 bar is introduced, in order to avoid cavitation. In order to regulate or control the damping forces, the throttle valves can be embodied to be electromagnetically adjustable, in order to be able to adapt the driving behavior of the motor vehicle to a prescribed vibration damping and/or a desired driving comfort. However, such throttle valves are relatively slow in their regulating behavior, so that often rapid vibration variations cannot be damped quickly enough.

In the prior art, it is known to use electrorheological fluid dampers. In such electrorheological fluid dampers, a piston is held inside the interior of what is known as a "pressure tube" so as to be slidable relative to that pressure tube. The piston divides the inner cavity of the pressure tube into an upper extension chamber and a lower retraction chamber. When moving the piston, fluid flows from one of those chambers to the respective other chamber by means of a conduit. What is particular about those electrorheological fluid dampers is that a voltage can be applied across the conduit. This voltage creates an electrical field, which in turn affects and generally increases the viscosity of the electrorheological fluid.

In consequence, by adjusting the voltage applied across the conduit, one can selectively make it harder (by increasing the viscosity) for the electrorheological fluid to flow through that conduit. As will be appreciated, this has a significant effect on the speed with which the piston can move through the pressure tube, thereby strongly affecting the behavior of the vibration damper. Thus, by having such a damper, one can precisely adjust the damping behavior according to the specific needs of a user.

### SUMMARY OF THE INVENTION

### TECHNICAL PROBLEM

In the state of the art, the previously mentioned conduit is typically formed as a helical conduit between the pressure tube and an electrode tube provided so as to surround the pressure tube. Typically, there is provided on the pressure tube a helical component, which helical component abuts against the electrode tube in a fluid-tight manner. This helical component then defines, together with the pressure tube and the electrode tube, a helical conduit. If the pressure tube is made of an electrically conductive material, the pressure tube and the electrode tube serve as the two electrodes for applying a voltage across the conduit to thereby modify the viscosity of the electrorheological fluid which flows through that conduit, as was described before.

Typically, the pressure tube and the electrode tube are formed separately. Only after the helical component has been formed on the pressure tube is the pressure tube inserted into the electrode tube. As the present inventors have realized, problems can arise in the fluid-tight abutment of the helical component against the electrode tube, which can be due to manufacturing inaccuracies. For example, if the pressure tube has a diameter which is too low, there is no good abutment of the helical component against the electrode tube. In consequence, the electrorheological fluid would no longer be confined to flowing along the helical conduit, so that the damping performance would be deteriorated. The present inventors have also realized that similar issues can also occur due to the pressure tube and the electrode tube expanding and contracting thanks to temperature changes.

The present inventors have considered different ways of solving such problems.

In the state of the art, the helical component is typically a single component helix. The question is how to choose the material for forming that helix. If one uses a comparatively soft helix to seal against the electrode tube also in changing temperatures conditions and also taking into consideration manufacturing inaccuracies, this softness can accommodate for tolerances due to the production inaccuracies of the pressure tube and of the electrode tube. Also, the corresponding helix can easily accommodate for expansion of the two tubes due to different temperatures. In addition, such soft helices typically have a high compression set. However, the present inventors have also realized that comparatively soft helices have a lower side force stability, which leads to problems in sustaining a sufficient bonding force to the pressure tube.

A different approach contemplated by the present inventors would be to use a comparatively hard helix to withstand the side forces and to provide a sufficient bonding force to the pressure tube. However, there is then the problem that a high mounting force is required in order to ensure that the pressure tube can be fitted into the electrode tube (due to gap height tolerances) so as to have a sealing abutment of the helical component relative to the electrode tube.

Furthermore, it was found to be necessary to heat treat the helix to relax the helix material so as to not influence the inner diameter of the pressure tube. However, it was realized by the present inventors that after that process, it becomes difficult to manage the expansion of the pressure tube in the high temperature range.

In particular, due to the operation temperatures of the pressure tube and of the electrorheological fluid damper as a whole, which range from -40°C to 150°C, the pressure tube and the electrode tube typically expand and contract. This would then lead to gaps between the helix and the electrode tube, which would allow the electrorheological fluid to flow therethrough. It is evident that such a behavior would have a negative effect on the damping behavior of the electrorheological fluid damper.

### DESCRIPTION OF THE INVENTION

The present invention has been made to overcome or at least alleviate at least some of the previously mentioned disadvantages.

The invention is defined by the pressure tube according to claim 1, the electrorheological fluid damper according to claim 6 and the method of manufacturing thereof according to claims 10 and 14. Preferred embodiments are defined in the respective dependent claims.

According to claim 1, there is provided a pressure tube for use in an electrorheological fluid damper.

This pressure tube comprises a tube which is suitable for use as an inner cylinder in an electrorheological fluid damper. This tube would typically be made of an electrically conductive material, e.g. a metal, such as, for example, steel. However, other materials which provide a sufficient stiffness can also be used. When used in an electrorheological fluid damper, the tube will have on its inside the piston which was mentioned previously.

On an outer periphery of the pressure tube, there is provided a helix. This helix has the purpose of creating (together with the electrode tube) the helical conduit mentioned previously. The helix is fixed to the outer periphery of the tube and extends from the outer periphery of the tube radially outwardly.

The helix comprises an inner helical component and an outer helical component. Both the inner helical component and the outer helical component take the shape of a helix themselves. The outer helical component is provided at least partially on the inner helical component so that, in a cross section perpendicular to the extension of the helix, the outer helical component is at least partially, and preferably completely, provided on top of the inner helical component. By this, it is meant that the inner helical component serves as a basis for the outer helical component, so that the outer helical component is at least in parts not directly affixed to the pressure tube but is only affixed to the pressure tube by means of the inner helical component. This affixation could occur by means of a two step molding process, which would be an efficient and easy to implement way of manufacturing such a helix. Alternatively, the outer helical component could also be glued to the inner helical component.

In a cross section perpendicular to the direction of extension of the helix, the radial distance covered by the outer helical component is preferably at least between about 10 to 80%, more preferably 40-60 % of the total radial distance covered by the helix as a whole. Preferably, the inner helical component covers about 80-90% of the total radial distance covered by the helix as a whole. When measured in that cross section, the outer helical component preferably covers between about 40-60% of the total lengthwise extension of the helix, with the inner helical component preferably covering between about 90-100% of the total lengthwise extension of the helix.

According to the invention, the outer helical component is formed of a softer material than the material of the inner helical component. The relative softness of those two materials could, for example, be measured using the Young's modulus or the Shore hardness, such as the Shore A hardness (as defined in ASTM D2240-15).

By having such a two component helix, one combines the advantages of the soft helix and the hard helix described previously. The hard, inner component of the helix serves to provide a good bonding to the pressure tube and also provides guidance to the second component of the helix. In contrast, the elastic sealing component of the helix is formed by the outer helical component and serves to seal a gap between the hard helix and the electrode surface, despite varying temperature conditions and despite manufacturing inaccuracies. That is, one of the components, namely the inner helical component, is provided to ensure a good bonding to the pressure tube. The respective other component is provided to ensure a good sealing performance.

By the inner helical component extending radially further outward relative to the tube than the inner helical component, it is ensured that the respective "stiff" parts of the helix will have a gap to the electrode tube when inserted into such an electrode tube to form an electrorheological fluid damper. As will be discussed further when discussing the electrorheological fluid damper, such a gap leads to an advantageous performance of the electrorheological fluid damper.

Further advantages are that low assembly forces are required, compared with entirely "stiff" helices, thanks to the use of a less stiff outer helical component. This makes assembly easier and opens the door for a potential future mounting by hand. Further, no heat treatment after assembly is necessary. Thus, the assembly time is reduced, and there are fewer production risks, which occurred in the prior art due to mounting forces being higher than usage forces. In addition, the sealing is possible over a wide temperature range. Also, it is possible to reduce costs since there are fewer production steps.

It is preferred that the inner helical component comprises and preferably consists of polyamide, preferably polyamide comprising glass fibers, even more preferably 30% by weight of glass fibers relative to the weight of the inner helical component as a whole. A corresponding pressure tube has a good performance, when used in an electrorheological fluid damper. This is because, thanks to the stiffness of the material which is used for the inner helical component, a good attachment performance is ensured at least for the attachment of the inner helical component to the tube. Furthermore, polyamide and polyamide comprising up to 30% by weight of glass fibers is a material which the present inventors have found to be particularly useful for use in pressure tubes.

Preferably, the outer helical component comprises and more preferably consists of a rubber material such as nitrile butadiene rubber (NBR), ethylene propylene diene monomer (EPDM) rubber and/or thermoplastic polyurethane (TPU), where the rubber material preferably has a Shore A hardness of 70 or more. Corresponding outer helical component retain their good sealing performance across a wide temperature range. It is particularly preferred to use an outer helical component and an inner helical component which do not contain (or only contain insignificant amounts of) carbon particles, for example in the form of soot. This is to ensure that the electrical properties of the damper using such a pressure tube remain favorable also when used in high temperatures, where otherwise, the carbon particles could be released, which could eventually lead to a significantly lower electrical resistance between the pressure tube and the electrode tube.

It is furthermore preferred that the inner and outer helical components are provided shifted relative to each other so that one of the inner and outer helical components is shifted relative to the respective outer component along the longitudinal direction of the tube. By this feature, it is meant that, for example, the inner helical component as a whole is provided more towards one of the ends of the tubes than the respective outer helical component. For example, this could mean that the lines connecting the respective centres of gravity of the inner and outer helical components, where those centres of gravity are determined in a cross section perpendicular to the line along which the respective helical component extends, are shifted relative to each other longitudinally relative to the pressure tube. By having this shift, it is ensured that a gap can be provided, which leads to a good sealing performance of the outer helical component abutting against an electrode tube, when used in an electrorheological fluid damper.

It is preferred that the inner helical component has a Shore A hardness within the range of 40 to 80, preferably 60 to 75 and/or that the outer helical component has a Young's modulus within the range of 3000 to 6000 MPa, preferably 5000 to 6000 MPa. By having such a hardness for the outer helical component, it is ensured that a good sealing performance can be maintained. By having a corresponding stiffness of the inner helical component, it is made sure that the inner helical component can be safely secured to the pressure tube.

In particular, by having a high Young's modulus of the inner helical component, one achieves a comparatively good matching between the mechanical behavior of the pressure tube and the mechanical behavior of the inner helical component. In turn, this ensures that the inner helical component stays securely attached to the pressure tube also when the pressure tube expands and contracts due to temperature variations. The preferred values for the Young's modulus lead to a particularly good behavior when used together with a tube made of steel as the tube for use as the pressure tube.

According to claim 6, the electrorheological fluid damper of the present invention comprises the pressure tube according to one of claims 1 to 5. Such an electrorheological fluid damper has a good performance, as was evident from the previous discussion.

It is preferred that in such an electrorheological fluid damper, the pressure tube as defined previously is provided inside an electrode tube of the electrorheological fluid damper. The outer helical component abuts against the electrode tube to create a fluid-tight abutment for the electrorheological fluid contained within the electrorheological fluid damper. Since the pressure tube is provided so that the outer helical component abuts against the electrode tube, one creates a helical conduit for allowing the electrorheological fluid to flow therethrough. By applying a voltage so as to create an electrical field inside that conduit, one can modify the viscosity of the fluid so as to selectively change the damping performance of the electrorheological fluid damper.

By the definition that there is a fluid-tight abutment for the electrorheological fluid, it is meant that the electrorheological fluid is essentially prevented from flowing from one side of the abutment of the outer helical component to the respective other side of the abutment without flowing along the helical conduit. I.e., the primary flow path for an electrorheological fluid would be along the helical conduit.

It is also preferred that there is a radial gap between the radially outermost portion of the inner helical component and the electrode tube, with that gap at room temperatures preferably being within the range of from 0.05 to 0.1 mm. Thus, at room temperatures, i.e., at roughly 20-25°C, there is to be a gap between the radially outermost portion of the inner helical component and the electrode tube. This gap does not negatively affect the sealing performance of the abutment of the outer helical component relative to the electrode tube, since that function is provided by the outer helical component which abuts against the electrode tube. It is preferred that the gap is almost closed at temperatures of about -40°C.

One purpose of this gap is that, even taking into consideration manufacturing tolerances and temperature variations which will be experienced by the electrorheological fluid damper, the force applied to the inner helical component in the radial direction is either zero or is limited to a value that has no or only a marginal influence on the material relaxation at high temperatures and that has also no or at most a marginal influence on the inner diameter of the pressure tube to prevent a higher friction of the piston sliding inside it.

In contrast, the outer helical part is arranged to provide a sufficient contact to the electrode tube taking into consideration manufacturing inaccuracies and the varying temperature conditions experienced by the electrorheological fluid damper and provides enough compression set for a sealing functionality.

By having this combination of a radially further outwardly extending outer helical component and a radially less outwardly extending inner helical component, in operation conditions, the electrorheological fluid damper is arranged so that the fluid pressure pushes the protruding parts of the outer helical component into the gap between the inner helical part and the electrode tube. This further improves the sealing functionality. Hence, by having the features discussed previously regarding the gap, the sealing functionality is improved, which then leads to an electrorheological fluid damper having an improved performance.

It is preferred that the gap at room temperatures is within the range of from 0.5 to 0.1 mm, since the corresponding range has shown to be particularly beneficial for the improvement in the sealing performance.

It is furthermore preferred to provide a ring seal formed so as to close a gap between the pressure tube and the electrode tube, where the ring seal is preferably integrally formed with the helix. Having such a ring seal improves the fluid flow behavior. By providing the ring seal integrally with the helix or with at least one of the helical components (preferably the outer helical component), it becomes possible to easily manufacture a corresponding electrorheological fluid damper.

The invention is also solved by the independent method claim for manufacturing a pressure tube for use in an electrorheological fluid damper. Preferably, the pressure tube is the pressure tube according to one of the claims mentioned previously. According to that method, a tube which is suitable for use as an inner cylinder in an electrorheological fluid damper and which could, for example, be made of a metal, is provided. An inner helical component is formed on the tube, for example by injection molding. Further, an outer helical component is provided at least partially on the inner helical component so as to radially extend beyond the inner helical component. The outer helical component is formed of a softer material than the material of the inner helical component.

A correspondingly manufactured pressure tube has the advantages mentioned previously. Further, since the stiff part of the helix (that is, the inner helical component) is provided to at least partially support the outer helical component, the inner helical component can guide the outer helical component of the helix during assembly. This improves the manufacturing accuracy.

It is preferred that at least one and preferably both of the inner helical component and the outer helical component are manufactured by injection molding. Such a method of manufacture is easy to implement, thus leading to low costs and a high quality helix. In consequence, a resulting pressure tube leads to an electrorheological fluid damper having a good performance.

It is preferred that the inner and outer helical components are manufactured simultaneously. This reduces the time needed for manufacturing the pressure tube, which, in turn, reduces costs, since fewer production steps are required.

It also preferred to provide a ring seal at one of the longitudinal ends of the tube, with the ring seal preferably being formed of the same material as the outer helical component. Providing such a ring seal leads to the advantages mentioned previously. Preferably, the ring seal and the outer helical component are formed integrally, which simplifies manufacture.

A further solution to the technical problem is the method of manufacturing an electrorheological fluid damper according to the corresponding independent method claim. It comprises manufacturing a pressure tube using the method of one of claims 10 to 13, providing an electrode tube, and fitting the pressure tube into the electrode tube so that the outer helical component abuts against the electrode tube so as to create a fluid-tight abutment. In consequence, a corresponding electrorheological fluid damper has the advantages mentioned previously.

### BRIEF DESCRIPTION OF THE DRAWINGS

Figure 1 schematically shows an electrorheological fluid damper.
Figure 2 shows a cut-out section of a pressure tube having an helical component.
Figure 3 shows an enlarged part A of figure 2.

### DETAILED DESCRIPTION OF THE DRAWINGS

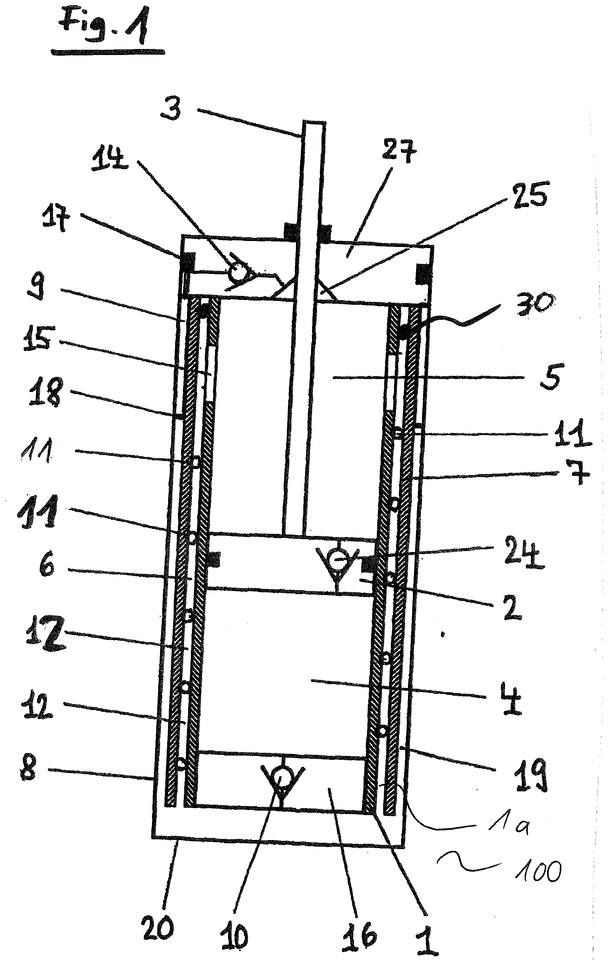

In figure 1, an electrorheological fluid damper comprising an electrorheological fluid is shown, which is embodied as a so-called two-tube damper as a shock damper or shock absorber for a motor vehicle. This fluid damper is somewhat similar to the one shown in Fig. 1 of US 2016/0059656 A1, and reference is made to that document for further explanations as to the general way of operation of such fluid dampers (cf. paragraphs [0017] to [0030]).

This damper comprises a pressure tube 1a comprising a tube for use as an inner cylinder 1, in which an axially slidable piston 2 is arranged. Onto the axially slidable piston 2, a piston rod 3 is secured that is extendable upwardly in the installed position. The piston 2 divides the pressure tube 1a into an upper extension chamber 5 and a lower retraction chamber 4, in which an electrorheological fluid is filled as a hydraulic pressure medium. Coaxially to the tube 1, a spaced apart electrode tube 7 is arranged which is preferably made of aluminium.

Between those two tubes 1, 7, there is provided a ring-gap as a throttle gap 6. The throttle gap 6 is connected at its upper end with the extension chamber 5 through a hole 15 in the inner cylinder 1 and with the retraction chamber 4 through a non-return valve 10 as a bottom valve in an inner cylinder lid 16 of the tube 1.

Coaxially around the electrode tube 7, there is further provided a spaced-apart outer tube 8 of which the upper part represents a gas pressure chamber 9 into which is filled a pneumatic pressure medium that is provided with a low upper pressure of approximately 4 to 7 bar. In its upper part, the gas pressure chamber 9 is sealed by a ring seal 17 between the electrode tube 3, an upper cylinder lid 27 and an outer tube 8.

In the lower region, the gas pressure chamber 9 is bounded or limited by the height of the electrorheological fluid, of which the fluid level 18 in the outer annual chamber 19 between the outer tube 8 and the electrode tube 7 depends on the respective piston position. For sealing the vibration damper in the lower or bottom area, a lower cylinder lid 20 is mounted on the outer tube 8, which closes the outer annular chamber 9 to the outside.

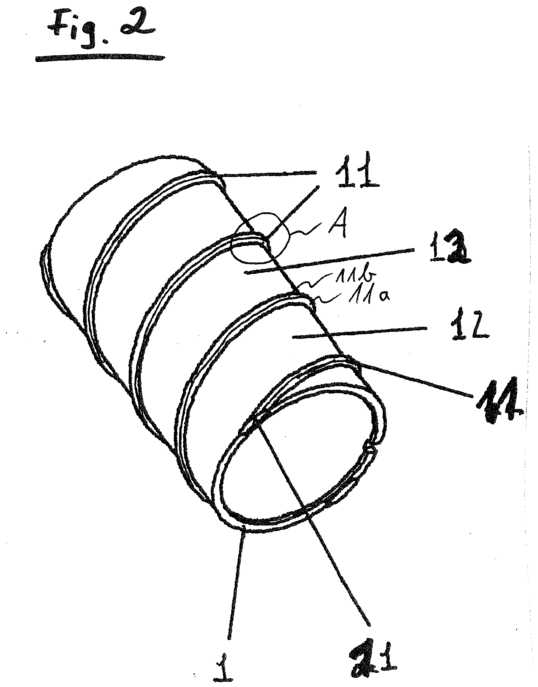

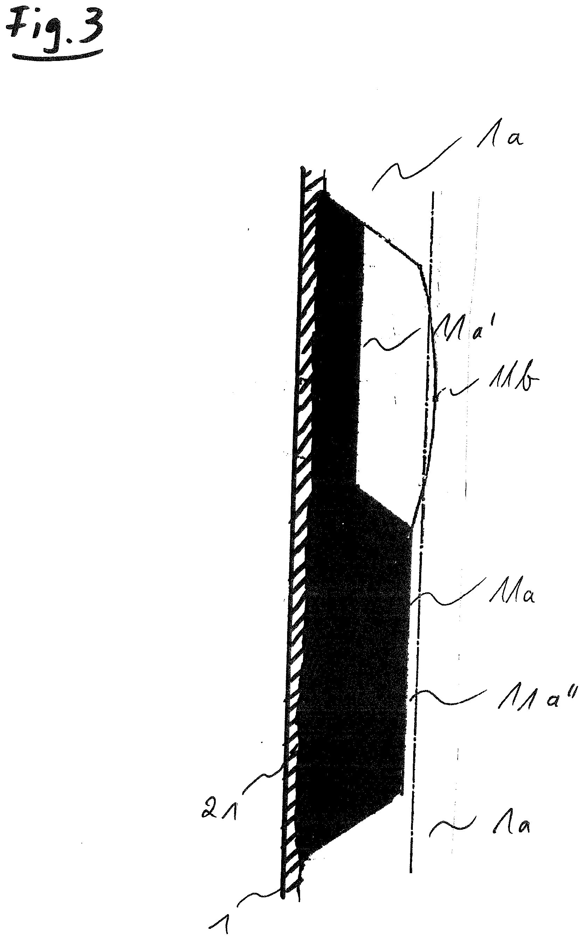

The throttle gap 6 remaining between the tube 1 and the electrode tube 7 is divided into partial gap 12 by the helix 11 to be discussed further below and shown in more detail in figures 2 and 3.

For avoiding a high pre-pressure in the gas pressure chamber 9, there is additionally provided in the piston 2 a second non-return valve 24 that is openable towards the extension chamber 5, through which valve the electrorheological fluid flows from the retraction chamber 4 into the extension chamber 5 during the retraction of piston rod. Thus, the retracting piston rod volume moves through the throttle gap 12 to the outer annular chamber 19 and thus increases the fluid level 18.

Because in connection with longer service times, due to the principle of communicating tubes and other operating conditions, also gas bubbles can get through the valve partial gap 12 out of the gas pressure chamber 9 into the extension chamber 5, a gas collecting space 25 is provided at the uppermost point of the extension chamber 5 in the area of the outer cylinder lid 27 or an annular ring part in connection therewith. This gas collecting space is connected with a first non-return valve 14, whose outlet side communicates with the gas pressure chamber 9.

There is furthermore provided a ring seal 30 for sealing the tube 1 against the electrode tube 7 at the respective upper end.

Figure 2 shows a portion of the tube 1 on which a helical groove or recess 21 is milled, which has a prescribed pitch. In this groove 21, a helix 11 comprising an inner helical component 11a and an outer helical component 11b are injection molded. Those two helical components 11a, 11b protrude relative to the outer circumferential surface of the tube 1 by a prescribed height.

We shall now discuss the configuration of the helical component further by reference to figure 3.

As can be seen from that figure, inside a recess 21 formed on the surface of the tube 1, an inner helical component 11a is provided. This inner helical component has a step like shape. On a recessed portion 11a', the outer helical component 11b is provided.

This outer helical component 11b, which would also be called an elastic helix, is made of a softer material than the stiff component, namely the inner helical component 11a, which could also be called a stiff helix.

The thickness of the recessed portion 11a' relative to the outer, non-recessed surface of the tube 1 is approximately 0.3 mm. The respective non-recessed portion 11a" of the inner helical component has a thickness of approximately 0.75 mm. The radially outer surface of the outer helical component is curved with a radius of curvature of about 3.4 mm.

Relative to the non-recessed surface of the tube 1, the outer helical component 11b extends to a radial distance of approximately 0.9 mm. In use, the electrode tube would form together with the pressure tube 1a (which is indicated in figure 3 by a dot-dashed line) a gap having a thickness of about 0.83 mm. The flank angle of the helical component would be approximately 55 degrees.

In that respect, we note that all of those specific values for the thicknesses, distances, radius of curvature and flank angles are mere examples and are by the means limiting.

## Claims

1. Pressure tube (1a) for use in an electrorheological fluid damper (100), comprising:
a tube (1) for use as an inner cylinder in an electrorheological fluid damper,
a helix (11) provided on an outer periphery of the tube (1), the helix (11) comprising:
an inner helical component (11a) and an outer helical component (11b) provided at least partially on the inner helical component (11a), the outer helical component (11b) being provided so as to extend radially further outward relative to the tube (1) than the inner helical component (11a),
the outer helical component (11b) being formed of a softer material than the material of the inner helical component (11a).

2. Pressure tube (1a) according to claim 1, wherein the inner helical component (11a) comprises and preferably consists of polyamide, preferably polyamide comprising glass fibres, preferably 30% by weight of glass fibres.

3. Pressure tube (1a) according to claim 1 or 2, wherein the outer helical component (11b) comprises and preferably consists of a rubber material, preferably nitrile butadiene rubber, ethylene propylene diene monomer (M-class) rubber and/or thermoplastic polyurethane, the rubber material preferably having a Shore A hardness of 70 or more.

4. Pressure tube (1a) according to one of the preceding claims, wherein the inner and outer helical components (11a,b) are provided shifted relative to each other so that one of the inner and outer helical components (11a,b) is shifted relative to the respective other helical component along the longitudinal direction of the tube (1).

5. Pressure tube (1a) according to one of the preceding claims, wherein the outer helical component (11b) has a Shore A hardness within the range of 40 to 80, preferably 60 to 75 and/or wherein the inner helical component (11a) has a Young's modulus within the range of 3000 to 6000 MPa, preferably 5000 to 6000 MPa.

6. Electrorheological fluid damper (100) comprising the pressure tube (1a) according to one of the preceding claims.

7. Electrorheological fluid damper (100) according to claim 6, wherein the pressure tube (1a) is provided inside an electrode tube (7) of the electrorheological fluid damper (100), with the outer helical component (11b) abutting against the electrode tube (7) so as to create a fluid-tight abutment for the electrorheological fluid contained within the electrorheological fluid damper (100).

8. Electrorheological fluid damper (100) according to claim 7, wherein there is a radial gap between the radially outermost portion of the inner helical component (11a) and the electrode tube (7), the gap preferably being at room temperature within the range of from 0.05 to 0.1 mm.

9. Electrorheological fluid damper (100) according to claim 7 or 8, further comprising a ring seal formed so as to close a gap between the pressure tube (1a) and the electrode tube (7), the ring seal (30) preferably being integrally formed with the helix (11).

10. Method of manufacturing a pressure tube for use in an electrorheological fluid damper, preferably the pressure tube (1a) according to one of claims 1 to 5, the method comprising:
- providing a tube (1) for use as an inner cylinder in the electrorheological fluid damper,
- forming an inner helical component (11a) on the tube,
- forming an outer helical component (11b) at least partially on the inner helical component (11a) so as to radially extend relative to the tube (1) beyond the inner helical component (11a),
wherein the outer helical component (11b) is formed of a softer material than the material of the inner helical component (11a).

11. Method according to claim 10, wherein at least one and preferably both of the inner helical component (11a) and the outer helical component (11b) are manufactured by injection molding.

12. Method according to claim 11, wherein the inner and the outer helical component (11a, 11b) are manufactured simultaneously.

13. Method according to one of claims 10 to 12, further comprising providing a ring seal (30) at one of the longitudinal ends of the tube, the ring seal (30) preferably being formed of the same material as the outer helical component (11b).

14. Method of manufacturing an electrorheological fluid damper, comprising:
- manufacturing a pressure tube (1a) using the method of one of claims 10 to 13,
- providing an electrode tube (7),
- fitting the pressure tube (1a) into the electrode tube (7) so that the outer helical component (11b) abuts against the electrode tube (7) so as to create a fluid-tight abutment.
